# FASCICULE DE BREVET EUROPEEN

(11) **EP 1 275 580 B1**
(45) Date de publication et mention de la délivrance du brevet: **28.03.2007**
(21) Numéro de dépôt: 02291647.2
(22) Date de dépôt: 02.07.2002
(51) Int. Cl.: B65B 9/04, B65B 61/06, B65B 61/12

(54) **Procédé et installation de thermoformage, remplissage et fermeture de récipients à contre-dépouille**
Verfahren und Vorrichtung zum Thermoformen, Füllen und Verschliessen von Behältern mit Hinterschnitt
Method and machine for thermoforming, filling and closing containers with an undercut

(30) Priorité: 11.07.2001 FR 0109196
(43) Date de publication de la demande: 15.01.2003
(73) Titulaire: ERCA FORMSEAL, 91940 Les Ulis Cedex (FR)
(72) Inventeur: Schwab, Dominique, 8000 Versailles (FR); Gandon, Bernard, 78730 Saint-Arnoult-en-Yvelines (FR); Luc, Michel, 92290 Chatenay-Malabry (FR)
(74) Mandataire: Intes, Didier Gérard André

(56) Documents cités:
- CH-A- 582 604
- FR-A- 2 644 425
- US-A- 3 735 654

## Description

L'invention concerne un procédé de fabrication, de remplissage et de fermeture de récipients à contre-dépouille dont les rebords ont des diamètres inférieurs aux diamètres des corps desdits récipients, procédé dans lequel on fait avancer une bande de matériau thermoplastique pas à pas et, entre deux déplacements successifs de ladite bande, on réalise par thermoformage de ladite bande une rangée transversale de récipients, on remplit une rangée de récipients réalisés dans un cycle précédent, on ferme les récipients remplis d'une autre rangée avec des opercules et on sépare les récipients fermés dans un cycle antérieur de la bande de matériau thermoplastique.

L'invention concerne également une installation de fabrication, de remplissage et de fermeture de récipients à contre-dépouille présentant des rebords ayant des diamètres inférieurs aux diamètres des corps desdits récipients, comportant des moyens pour faire avancer pas à pas une bande de matériau thermoplastique, et comportant d'amont en aval dans le sens de l'avancement pas à pas de ladite bande, une station de thermoformage apte à thermoformer dans ladite bande une rangée transversale de récipients, une station de remplissage d'une rangée de récipients, une station de fermeture d'une rangée de récipients remplis avec des opercules, et une station de séparation d'une rangée de récipients fermés de la bande de matériau thermoplastique.

Lorsqu'on thermoforme des récipients sans contre-dépouille dans une bande de matériau thermoplastique, on applique une bande à opercules sur les récipients remplis, on scelle la bande à opercules sur le rebord des récipients, et on découpe ensemble la bande à opercules et la bande de matériau thermoplastique dans un poste de séparation, qui comporte un outil supérieur de découpe et un contre-outil inférieur, l'outil et le contre-outil étant mobiles verticalement et se rapprochant l'un de l'autre au cours d'un cycle de traitement pour séparer entre eux les récipients remplis et fermés par des opercules. Lorsque les récipients sont destinés à être présentés par groupe d'au moins deux récipients reliés par une ligne de liaison, on prend soin de réaliser la découpe en préservant cette ligne de liaison, auquel cas, seule la bande à opercules est découpée sur le tracé correspondant à la ligne de liaison. L'outil de découpe comporte une lame qui coopère avec une contre-lame afin de réaliser une découpe simultanée des deux bandes sur toute leur épaisseur en dehors des lignes de liaison, et, au niveau des lignes de liaison, seule la bande à opercules est découpée et la bande de matériau thermoplastique est entaillée sur une partie de son épaisseur. L'outil de découpe et le contre-outil doivent être positionnés avec une précision de 5 µm dans le plan de la bande de matériau thermoplastique.

Dans le cas de récipients à contre-dépouille, dans lesquels le diamètre du rebord de chaque récipient est inférieur au diamètre du corps du récipient, le contre-outil inférieur doit être réalisé en au moins deux éléments séparables que l'on doit déplacer verticalement et radialement vers l'axe du récipient avant de procéder à la découpe par descente de l'outil de découpe. Cette disposition nécessite une cinématique complexe, et une difficulté pour obtenir la précision requise de 5 µm. Elle nécessite également un débattement suffisant entre les corps des récipients pour permettre le passage des éléments séparables du contre-outil, lors de leur montée et lors de leur descente.

Une difficulté du même genre se produit à la station de thermoformage de récipients à contre-dépouille. Les moules de thermoformage sont réalisés en deux parties séparables. Toutefois, lors de la montée des moules, il n'y a pas d'obstacles, et le problème de la séparation ne se pose que pour le démoulage. En outre, la forme des pistons de moulage ne nécessite pas une précision de 5 µm dans le positionnement respectif des moules et des pistons au cours du thermoformage.

L'invention a pour but de proposer un procédé et une installation, tels que mentionnés en introduction, qui permettent simplement et pour un faible coût la séparation des récipients remplis et fermés de la bande de matériau thermoplastique.

Ce but est atteint par le procédé selon l'invention par le fait qu'avant le thermoformage d'une rangée de récipients on réalise, dans une bandelette transversale de la bande de matériau thermoplastique employée pour le thermoformage d'une rangée de récipients dans un cycle ultérieur, et pour chaque récipient à thermoformer, des découpes préliminaires séparées par des points d'attache qui définissent la quasi totalité du pourtour final du rebord dudit récipient, les points d'attache étant rompus lors de la séparation des récipients dans un cycle ultérieur après la fermeture des récipients remplis.

Ainsi, une grande partie de la découpe du pourtour des récipients est réalisée sur une portion plane de bande de matériau thermoplastique.

Avantageusement, on rompt les points d'attache en appliquant des pistons mobiles sur les rebords des récipients, ces pistons coopérant avec notamment des contre-outils fixes disposés entre les récipients d'une rangée.

Pour assurer la stérilité de la bande de matériau thermoplastique, les découpes préliminaires sont réalisées par fusion du matériau thermoplastique de la bande.

Pour limiter les pertes de matériau plastique entre deux rangées transversales de récipients, on étire, avant le thermoformage, une zone de déchets de la bande en matériau thermoplastique comprise entre deux bandelettes transversales consécutives.

Très avantageusement, avant de fermer les récipients remplis, on découpe une rangée d'opercules dans une bande à opercules avançant pas à pas. Ces opercules sont découpés selon un contour adapté au moins en partie au contour final des rebords des récipients. Ces opercules peuvent présenter chacun une languette de préhension que l'on dispose vers l'extérieur au-delà d'une découpe discontinue du récipient rempli correspondant. Au cours d'un cycle de traitement, on découpe une rangée d'opercules, on les amène au-dessus d'une rangée de récipients remplis, on les immobilise sur les rebords des récipients par une liaison par points, et on les scelle sur les rebords des récipients dans un cycle ultérieur.

Pour diminuer les déchets dans la bande à opercules, on découpe une rangée d'opercules dans une bande à opercules ayant une largeur inférieure à la largeur de la bande de matériau thermoplastique. Le pas d'avancement de la bande à opercules est de préférence inférieur au pas d'avancement de la bande de matériau thermoplastique.

L'installation selon l'invention est caractérisée par le fait qu'elle comporte en amont de la station de thermoformage une station de découpe préliminaire apte à réaliser dans une bandelette transversale de la bande thermoplastique employée pour le thermoformage d'une rangée de récipients dans un cycle ultérieur et pour chaque récipient à thermoformer, des découpes préliminaires séparées pour des points d'attache, qui définissent la quasi totalité du pourtour final du rebord d'un récipient correspondant, et par le fait que la station de séparation comporte des moyens pour rompre lesdits points d'attache dans un cycle ultérieur.

De préférence, les moyens de rupture des points d'attache d'une rangée de récipients remplis et fermés comportent des pistons verticalement mobiles qui appuient sur les rebords desdits récipients et coopèrent notamment avec des contre-outils fixes disposés entre les récipients de ladite rangée.

Avantageusement, la station de découpe préliminaire comporte des outils de découpe à chaud.

L'installation comporte en outre, en amont de la station de thermoformage, des moyens pour étirer une zone de déchets de la bande en matériau thermoplastique comprise entre deux bandelettes transversales consécutives.

Elle comporte également des moyens pour avancer pas à pas une bande à opercules, des moyens pour découper une rangée d'opercules, des moyens pour les amener au-dessus d'une rangée de récipients remplis, des moyens pour les immobiliser sur les rebords des récipients correspondants au cours d'un cycle et des moyens pour les sceller sur les rebords au cours d'un cycle ultérieur.

D'autres avantages et caractéristiques de l'invention ressortiront à la lecture de la description suivante d'un mode de réalisation préféré de l'invention, faite à titre d'exemple non limitatif et en référence aux dessins annexés, dans lesquels :
- la figure 1 est une vue schématique générale d'une installation conforme à l'invention et permettant de mettre en oeuvre le procédé de l'invention ;
- la figure 2 est une coupe selon un plan de symétrie d'un récipient rempli et fermé ;
- la figure 3 est une vue de dessus du récipient de la figure 2 ;
- la figure 4 est une vue partielle de la bande thermoplastique après le passage à la station de découpe préliminaire et avant thermoformage ;
- la figure 5 est une vue de dessus d'une rangée de récipients au poste de séparation final et de la rangée de récipients située en amont ; et
- la figure 6 est une coupe verticale selon la ligne VI-VI de la figure 5.

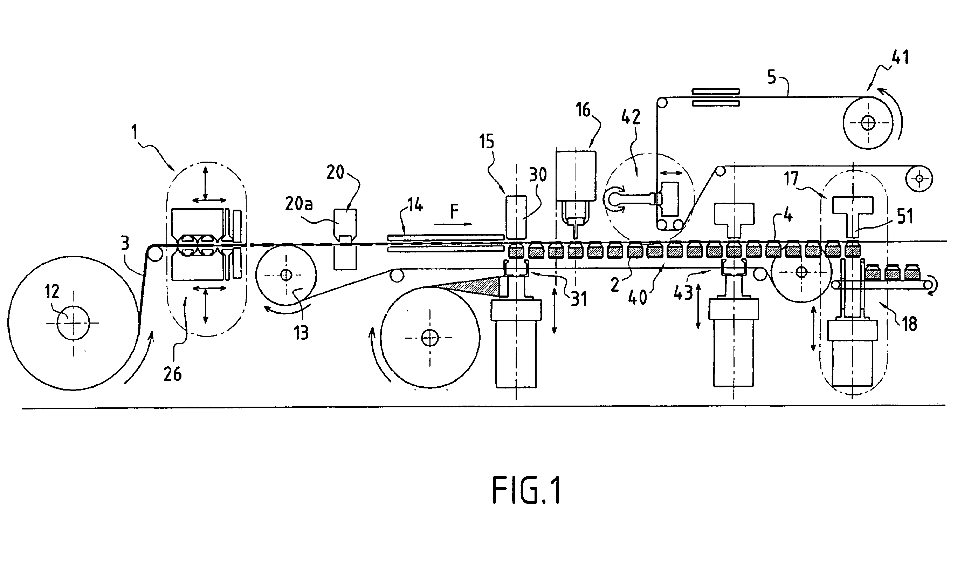

La figure 1 montre une installation 1 servant à thermoformer des récipients 2 à partir d'une bande de matériau thermoplastique 3, à remplir ces récipients avec un produit tel qu'un produit liquide, pâteux ou gélatineux, en particulier un produit alimentaire, à fermer les récipients remplis avec des opercules 4 tirés d'une bande à opercules 5, et à découper les récipients 2 remplis et fermés de la bande de matériau thermoplastique.

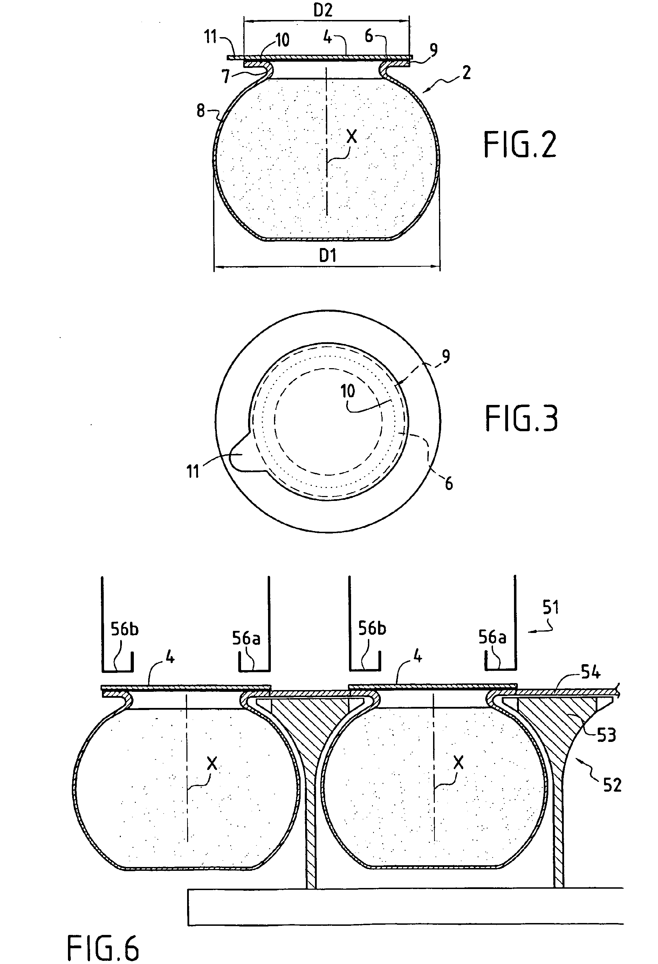

Les récipients 2 réalisés, montrés en détail sur les figures 2 et 3, sont à contre-dépouille et comportent un rebord 6 dans le plan horizontal du chemin de défilement de la bande thermoplastique 3 raccordé par un col 7 à un corps de récipient 8 qui a un diamètre D₁ supérieur au diamètre D₂ du pourtour 9 du rebord 6 du récipient 2.

Chaque récipient 2 rempli et fermé comporte un opercule 4 fixé par un cordon de soudure fermé 10 sur le rebord 6. Cet opercule a un diamètre au moins égal au diamètre D₂ du pourtour 9 du récipient 2 et il peut présenter une languette de préhension 11 destinée à faciliter l'ouverture du récipient 2 qui s'étend radialement vers l'extérieur au-delà d'une zone 9a du pourtour 9, ainsi que cela est montré sur les figures 2 et 3. Les récipients 2 peuvent être de révolution autour d'un axe X vertical, mais ils peuvent également avoir une section horizontale non circulaire.

L'installation 1 comporte une bobine 12 à partir de laquelle est déroulée la bande thermoplastique 3 qui traverse horizontalement toute l'installation en étant entraînée pas à pas par des moyens de soutien et d'entraînement, tel que le convoyeur 13. La bande thermoplastique 3 se déplace dans le sens de la flèche F et traverse, d'amont en aval, différentes stations successives de l'installation.

Ainsi, dans le sens de la flèche F, l'installation comporte successivement une boîte de chauffe 14 qui sert à porter la bande thermoplastique 3 à la température de thermoformage, une station de thermoformage 15 dans laquelle les récipients 2 sont thermoformés et éventuellement banderolés, une station de dosage et de remplissage 16 de récipients 2 réalisés dans un cycle précédent, une station de fermeture 40 des récipients 2 remplis dans un cycle antérieur avec des opercules, une station de séparation 17 des récipients fermés dans un cycle précédent et une station d'évacuation 18 des récipients découpés individuellement. A chaque cycle de traitement entre deux avancées consécutives de la bande thermoplastique 3, une rangée transversale de récipients 2 est réalisée, une deuxième rangée de récipients 2 est remplie, une troisième rangée de récipients est fermée et une quatrième rangée de récipients est séparée de la bande thermoplastique, ces différentes rangées étant alors disposées de l'amont vers l'aval dans les stations décrites ci-dessus.

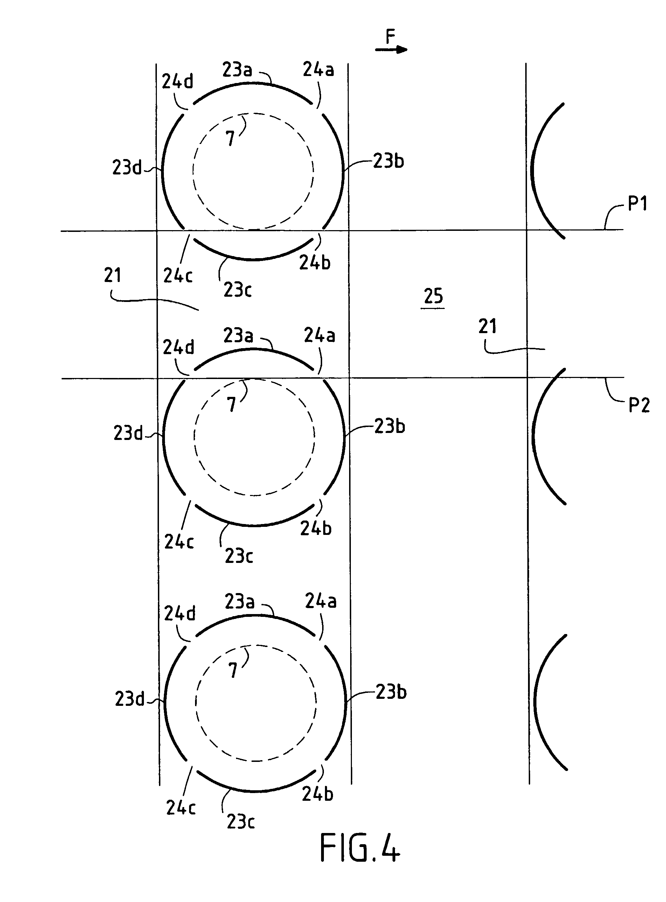

En amont de la boîte de chauffe 14, l'installation 1 comporte une station de découpe préliminaire 20 qui réalise, dans une bandelette 21 de la bande thermoplastique 3, dans laquelle sera réalisée une rangée de récipients 2 par thermoformage dans un cycle ultérieur, et dans les zones correspondant au pourtour 9 du rebord 6 de chaque récipient à thermoformer, une pluralité de découpes préliminaires 23a, 23b, 23c, 23d, séparées par des points d'attache 24a, 24b, 24c, 24d, qui définissent avant le thermoformage la quasi totalité du pourtour final du récipient correspondant. Ces points d'attache 24a, 24b jouent le rôle de pontets qui relient le disque servant au thermoformage d'un récipient à la bande de déchets. Ces point d'attache 24a, au nombre de quatre par récipient dans l'exemple montré sur la figure 4, peuvent être en nombre supérieur. Ils seront rompus ultérieurement par cisaillement au poste de séparation 17.

Les découpes préliminaires 23a à 23d ont une étendue angulaire, vue de l'axe X du récipient correspondant, nettement supérieure à l'étendue des points d'attache 24a à 24d.

La station de découpe préliminaire 20 comporte un outil supérieur de découpe 20a mobile verticalement et qui coopère avec un contre-outil inférieur. L'outil de découpe comporte plusieurs lames ayant la configuration des découpes 23a à 23d. De préférence, la découpe est réalisée par fusion du matériau thermoplastique afin de conserver la stérilité de la bande 3.

Du fait que les récipients 2 sont à contre-dépouille, et que les diamètres D₂ des rebords 6 des récipients 2 sont inférieurs au diamètre D₁ des corps 8 de récipient, deux bandelettes consécutives 21 sont séparées par une zone de déchets 25 transversale de largeur non négligeable qui fera partie de la bande de déchets à la sortie de la station de découpe.

Pour diminuer les pertes de matériau thermoplastique, l'installation comporte en amont de la boîte de chauffe 14, et de préférence en amont de la station de découpe préliminaire 20, une station d'étirage 26 de la bande thermoplastique 3 qui amincit la paroi de la zone de déchets 25.

Cette station d'étirage 26 comporte des paires de pinces pour retenir des bandelettes adjacentes 21, des moyens pour chauffer la zone à étirer entre deux bandelettes adjacentes 21, des moyens pour écarter les paires de pinces et des moyens pour refroidir la zone de déchets 25 étirée dans un cycle précédent.

La station de thermoformage 15 comporte une rangée de pistons 30 disposés au-dessus du chemin de la bande thermoplastique 3 et mobiles verticalement et une rangée de moules 31, en deux parties séparables, disposés au-dessous du chemin de la bande thermoplastique 3 et mobiles verticalement et dans le sens de la flèche F pour au moins la partie aval des moules afin de permettre le démoulage des récipients 2 qui sont à contre-dépouille.

La station de fermeture 40 des récipients remplis 2 comporte des moyens 41 pour entraîner pas à pas la bande à opercules 5 en synchronisme avec la bande thermoplastique 3, des moyens 42 pour découper une rangée d'opercules, les positionner sur les récipients remplis 2 d'une rangée de récipients, et les coller par points sur les rebords 6 de ces récipients, et un ensemble séparé 43 pour réaliser les cordons de soudure 10 sur lesdits récipients 2 au cours d'un cycle de traitement ultérieur.

Il ne reste plus qu'à rompre les points d'attache restants 24a à 24d des pourtours 9 d'une rangée de récipients 2 à la station de séparation 17.

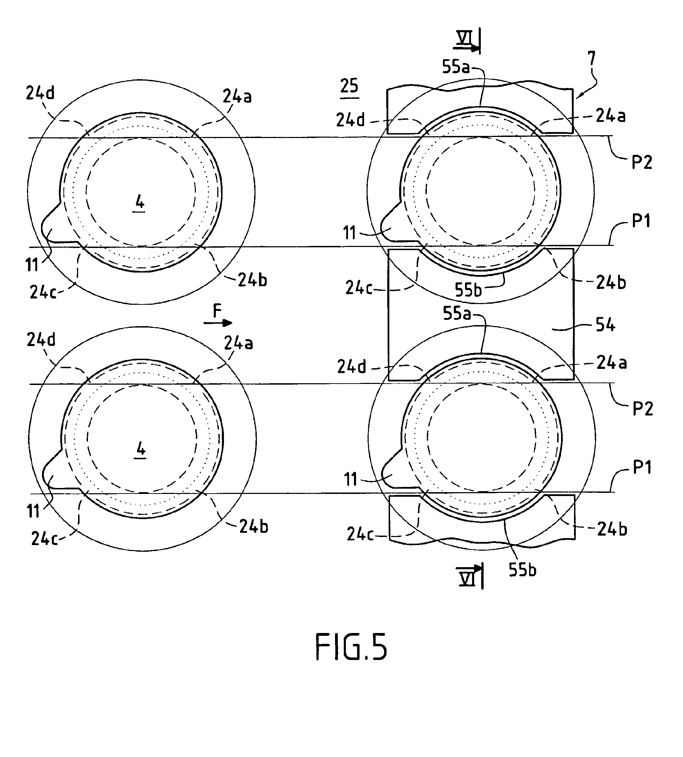

Dans cette station, la bandelette 21 présente sur sa face supérieure une rangée d'opercules 4 scellés sur les rebords 6 des récipients remplis, et les découpes préliminaires 23a à 23d disposées à l'intérieur et au voisinage immédiat du pourtour des opercules 4, ainsi que cela est montré sur la figure 5. Les languettes 11 des opercules 4 recouvrent en partie l'une de ces découpes préliminaires.

La station de séparation 17 comprend, de manière classique, pistons 51 verticalement mobiles disposés au-dessus de la bande thermoplastique 3, et un contre-outil 52 disposé au-dessous de cette dernière. Très avantageusement, une parti du contre-outil 52, visible sur la figure 6, est fixe et comporte, entre deux récipients 2 voisins, ainsi que sur les faces latérales externes des récipients extrêmes de la rangée, une enclume 53 dont la face supérieure 54, visible sur la figure 5, présente des embrèvements latéraux 55a, 55b dont le contour est conforme au contour des pourtours 9 des récipients adjacents, et qui sont destinés à coopérer avec les faces inférieures 56a et 56b des pistons 51 en appui sur les rebords 6 des récipients fermés et remplis. La section verticale transversale d'une enclume 53 est conformée de telle manière que les récipients remplis qui se positionnent à la station de séparation 17 lors de l'avancement de la bande thermoplastique 3 ne butent pas contre les enclumes 53. Très avantageusement, la partie fixe du contre-outil 51 présente également une enclume fixe du côté aval de la rangée de récipients située au poste de séparation 17. Du côté amont au contraire on fait venir un contre-outil mobile verticalement. Pour rompre les points d'attache 24a à 24d, les pistons 51 sont déplacés verticalement à travers la bande thermoplastique 3, la bande de déchets reposant sur les contre-outils 51 au voisinage des pourtours 9. La rupture des points d'attache se fait par traction et cisaillement.

Du fait que les récipients 2 réalisés par l'installation décrite ci-dessus sont à contre-dépouille et que les rebords 6 des récipients 2 ont un diamètre D₂ inférieur au diamètre des corps 8 de ces récipients, le pas d'avancement de la bande thermoplastique 3 est nettement supérieur au diamètre D₁ des corps 8 des récipients 2, pour permettre le démoulage à la station de thermoformage 15. On réalise une économie de matériau thermoplastique dans la bande de déchets de matériau thermoplastique, en réalisant l'étirage de la bande de déchets 25 dans la station d'étirage 26.

Traditionnellement, on obture les récipients remplis en appliquant une bande à opercules sur la bande de matériau thermoplastique après remplissage des récipients 2 et, après scellement, on découpe en même temps la bande à opercules et la bande thermoplastique à la station de découpe. Dans la présente invention, les opercules 4 sont découpés avant d'être scellés sur les rebords 6 des récipients de la bande à opercules avançant pas à pas. Le pas d'avancement de la bande à opercules 5 est très avantageusement inférieur au pas d'avancement de la bande thermoplastique 3 afin d'éviter une gâche excessive dans la bande à opercules 3. En outre, du fait que, dans une rangée de récipients 2, les rebords 6 de deux récipients consécutifs sont séparés de l'écartement minimum des embrèvements 55a et 55b d'une enclume, on utilise une bande à opercules 4 ayant une largeur inférieure à la largeur de la bande thermoplastique 3 afin de diminuer encore les pertes dans la bande à opercules 3.

## Revendications

1. Procédé de fabrication, de remplissage et de fermeture de récipients (2) à contre-dépouille dont les rebords (6) ont des diamètres (D₂) inférieurs aux diamètres (D₁) des corps (8) desdits récipients (2), procédé dans lequel on fait avancer une bande (3) de matériau thermoplastique pas à pas, et entre deux déplacements successifs de ladite bande (3), on réalise par thermoformage de ladite bande une rangée transversale de récipients (2), on remplit une rangée de récipients réalisés dans un cycle précédent, on ferme les récipients remplis d'une autre rangée avec des opercules (4) et on sépare les récipients, fermés dans un cycle antérieur, de la bande de matériau thermoplastique (3),
**caractérisé par le fait que**, avant le thermoformage d'une rangée de récipients (2), on réalise, dans une bandelette (21) transversale de la bande (3) de matériau thermoplastique employée pour le thermoformage d'une rangée de récipients (2) dans un cycle ultérieur, et pour chaque récipient à thermoformer, des découpes préliminaires (23a à 23d) séparées par des points d'attache (24a à 24d), qui définissent la quasi-totalité du pourtour final (9) du rebord (6) dudit récipient, les points d'attache (24a et 24b) étant rompus lors de la séparation des récipients dans un cycle ultérieur après la fermeture des récipients remplis.

2. Procédé selon la revendication 1, **caractérisé par le fait que** l'on rompt les points d'attache en appliquant des pistons mobiles (51) sur les rebords (6) des récipients (2), ces pistons coopérant avec notamment des contre-outils fixes (53) disposés entre les récipients d'une rangée.

3. Procédé selon l'une des revendications 1 ou 2, **caractérisé par le fait que** les découpes préliminaires (23a à 23d) sont réalisées par fusion du matériau de la bande thermoplastique.

4. Procédé selon l'une quelconque des revendications 1 à 3, **caractérisé par le fait qu**'avant le thermoformage on étire une zone de déchets (25) de la bande en matériau thermoplastique comprise entre deux bandelettes transversales consécutives.

5. Procédé selon l'une quelconque des revendications 1 à 4, **caractérisé par le fait que**, avant de fermer les récipients remplis, on découpe une rangée d'opercules (4) dans une bande à opercules (5) avançant pas à pas.

6. Procédé selon la revendication 5, **caractérisé par le fait qu**'on découpe des opercules (4) ayant un contour adapté au moins en partie au contour final (9) des rebords (6) des récipients (2).

7. Procédé selon la revendication 6, **caractérisé par le fait qu**'on découpe les opercules (4) de telle manière qu'ils présentent chacun une languette de préhension (11) que l'on dispose vers l'extérieur au-delà d'une découpe discontinue (23a, 23b) du récipient (2) rempli correspondant.

8. Procédé selon l'une quelconque des revendications 5 à 7, **caractérisé par le fait qu**'au cours d'un cycle on découpe une rangée d'opercules (4), on les amène au-dessus d'une rangée de récipients remplis, on les immobilise sur les rebords des récipients par une liaison par points, et on les scelle sur les rebords (6) des récipients (2) dans un cycle ultérieur.

9. Procédé selon l'une quelconque des revendications 5 à 8, **caractérisé par le fait que** l'on découpe une rangée d'opercules (4) dans une bande à opercules (5) ayant une largeur inférieure à la largeur de la bande (3) de matériau thermoplastique.

10. Procédé selon la revendication 9, **caractérisé par le fait que** le pas d'avancement de la bande à opercules (5) est inférieur au pas d'avancement de la bande (3) de matériau thermoplastique.

11. Installation de fabrication, de remplissage et de fermeture de récipients (2) à contre-dépouille présentant des rebords (6) ayant des diamètres (D₂) inférieurs aux diamètres (D₁) des corps desdits récipients, comportant des moyens (13) pour faire avancer pas à pas une bande (3) de matériau thermoplastique, et comportant d'amont en aval, dans le sens de l'avancement pas à pas de ladite bande (3), une station de thermoformage (15) apte à thermoformer dans ladite bande une rangée transversale de récipients (2), une station de remplissage (16) d'une rangée de récipients, une station de fermeture (40) d'une rangée de récipients remplis avec des opercules (4), et une station de séparation (17) d'une rangée de récipients (2) fermés de la bande (3) de matériau thermoplastique,
**caractérisée par le fait qu**'elle comporte en amont de la station de thermoformage (15) une station de découpe préliminaire (20) apte à réaliser dans une bandelette (21) transversale de ladite bande (3) thermoplastique employée pour le thermoformage d'une rangée de récipients dans un cycle ultérieur pour chaque récipient à thermoformer, des découpes préliminaires (23a à 23d) séparées par des points d'attache (24a à 24d), qui définissent la quasi-totalité du pourtour final (9) du rebord (6) d'un récipient correspondant, et par le fait que la station de séparation (17) comporte des moyens pour rompre lesdits points d'attache (24a à 24d) dans un cycle ultérieur.

12. Installation selon la revendication 11, **caractérisée par le fait que** la station de découpe préliminaire comporte des outils de découpe à chaud.

13. Installation selon l'un des revendications 11 ou 12, **caractérisée par le fait que** les moyens de rupture des points d'attache (24a à 24d) d'une rangée de récipients remplis et fermés comportent des pistons verticalement mobiles (51) qui appuient sur les rebords (6) desdits récipients (2) et coopèrent notamment avec des contre-outils fixes (53) disposés entre les récipients de ladite rangée.

14. Installation selon l'une quelconque des revendications 11 à 13, **caractérisée par le fait qu'**elle comporte en outre, en amont de la station de thermoformage, des moyens (26) pour étirer une zone de déchets (25) de la bande (3) en matériau thermoplastique comprise entre deux bandelettes transversales (21) consécutives.

15. Installation selon la revendication 14, **caractérisée par le fait que** les moyens d'étirage (26) sont disposés en amont de la station de découpe préliminaire (20).

16. Installation selon l'une quelconque des revendications 11 à 14, **caractérisée par le fait qu'**elle comporte en outre des moyens (41) pour avancer pas à pas, une bande à opercules (5), des moyens (42) pour découper une rangée d'opercules, des moyens pour les amener au-dessus d'une rangée de récipients remplis, des moyens pour les immobiliser sur les rebords (6) des récipients (2) correspondants au cours d'un cycle et des moyens (43) pour les sceller sur les rebords (6) au cours d'un cycle ultérieur.

## Claims

1. A method of making, filling, and closing re-entrant receptacles (2) having rims (6) of diameter (D₂) smaller than the diameter (D₁) of the bodies (8) of said receptacles (2), in which method a strip (3) of thermoplastic material is caused to advance stepwise, and between two successive advances of said strip (3), a transverse row of receptacles (2) is made by thermoforming said strip, a row of receptacles made in a preceding cycle is filled, the filled receptacles of another row are closed with capsules (4), and the receptacles that were closed in an earlier cycle are separated from the strip of thermoplastic material (3),
the method being **characterised by** the fact that prior to thermoforming a row of receptacles (2), preliminary cuts (23a to 23d) separated by attachment points (24a to 24d) are formed in a transverse stripe (21) of the strip (3) of thermoplastic material used for thermoforming a row of receptacles (2) in a subsequent cycle, said preliminary cuts defining practically the entire final periphery (9) of the rim (6) of each receptacle that is to be thermoformed, the attachment points (24a and 24b) being broken when the receptacles are separated in a subsequent cycle after the filled receptacles have been closed.

2. A method according to claim 1, **characterised by** the fact that the attachment points are broken by pressing moving pistons (51) against the rims (6) of the receptacles (2), said pistons co-operating in particular with stationary backing tools (53) placed between the receptacles in a row.

3. A method according to claim 1 or claim 2, **characterised by** the fact that the preliminary cuts (23a to 23d) are made by melting the material of the thermoplastic strip.

4. A method according to any one of claims 1 to 3, **characterised by** the fact that, prior to thermoforming, a scrap zone (25) of the strip of thermoplastic material extending between two consecutive transverse stripes is subjected to stretching.

5. A method according to any one of claims 1 to 4, **characterised by** the fact that, prior to closing the filled receptacles, a row of capsules (4) are cut out in a capsule strip (5) that advances stepwise.

6. A method according to claim 5, **characterised by** the fact that capsules (4) are cut out so as to have an outline that matches at least in part the final outline (9) of the rims (6) of the receptacles (2).

7. A method according to claim 6, **characterised by** the fact that the capsules (4) are cut out in such a manner that each of them presents a pull tab (11) that is located on the outside beyond a discontinuous cut (23a, 23b) of the corresponding filled receptacle (2).

8. A method according to any one of claims 5 to 7, **characterised by** the fact that during a cycle in which a row of capsules (4) are cut out, they are brought over a row of filled receptacles, they are prevented from moving relative to the rims of the receptacles by being connected via points, and they are sealed to the rims (6) of the receptacles (2) in a subsequent cycle.

9. A method according to any one of claims 5 to 8, **characterised by** the fact that a row of capsules (4) is cut out from a capsule strip (5) of width that is smaller than the width of the strip (3) of thermoplastic material.

10. A method according to claim 9, **characterised by** the fact that the size of the advance step of the capsule strip (5) is smaller than the size of the advance step (3) of the thermoplastic material.

11. An installation for making, filling, and closing re-entrant receptacles (2) presenting rims (6) of diameter (D₂) smaller than the diameter (D₁) of the bodies of said receptacles, the installation comprising means (13) for causing a strip of thermoplastic material (3) to advance stepwise, and comprising from upstream to downstream in the stepwise advance direction of said strip (3): a thermoforming station (15) suitable for thermoforming a transverse row of receptacles (2) in said strip; a filling station (16) for filling a row of receptacles; a closing station (40) for closing a row of filled receptacles with capsules (4); and a separator station (17) for separating a row of closed receptacles (2) from the strip (3) of thermoplastic material,
the installation being **characterised by** the fact that it includes, upstream from the thermoforming station (15), a preliminary cutting station (20) suitable for making preliminary cuts (23a to 23d) separated by attachment points (24a to 24d) in a transverse stripe (21) of said strip (3) of thermoplastic material used for thermoforming a row of receptacles in a subsequent cycle, the preliminary cuts defining practically the entire final periphery (9) of the rim (6) of each receptacle that is to be thermoformed, and by the fact that the separator station (17) has means for breaking said attachment points (24a to 24d) in a subsequent cycle.

12. An installation according to claim 11, **characterised by** the fact that the preliminary cutting station has tools for hot cutting.

13. An installation according to claim 11 or claim 12, **characterised by** the fact that the means for breaking the attachment points (24a to 24d) of a row of filled and closed receptacles comprise vertically movable pistons (51) bearing against the rims (6) of said receptacles (2) and co-operating in particular with stationary backing tools (53) placed between the receptacles of said row.

14. An installation according to any one of claims 11 to 13, **characterised by** the fact that it further comprises, upstream from the thermoforming station, stretching means (26) for stretching a scrap zone (25) of the strip (3) of thermoplastic material, the scrap zone extending between two consecutive transverse stripes (21).

15. An installation according to claim 14, **characterised by** the fact that the stretching means (26) are disposed upstream from the preliminary cutting station (20).

16. An installation according to any one of claims 11 to 14, **characterised by** the fact that it further comprises means (41) for advancing a capsule strip (5) stepwise, means (42) for cutting out a row of capsules, means for bringing them over a row of filled receptacles, means for causing the capsules to be held in position on the rims (6) of the corresponding receptacles (2) during one cycle, and means (43) for sealing the capsules on the rims (6) during a subsequent cycle.

## Patentansprüche

1. Verfahren zum Herstellen, Füllen und Verschließen von Behältern (2) mit Hinterschnitt, deren Ränder (6) Durchmesser (D₂) haben, die kleiner sind als die Durchmesser (D₁) der Körper (8) der Behälter (2), bei dem ein Streifen (3) aus thermoplastischem Material schrittweise vorgeschoben wird und zwischen zwei aufeinanderfolgenden Vorschubbewegungen des Streifens (3) durch Thermoformen aus diesem Streifen eine quer angeordnete Reihe von Behältern (2) erzeugt wird, eine Reihe von Behältern, die in einem vorhergehenden Zyklus erzeugt wurden, gefüllt wird, die gefüllten Behälter einer anderen Reihe mit Deckeln (4) verschlossen werden und die in einem vorhergehenden Zyklus verschlossenen Behälter von dem thermoplastischen Streifen (3) abgetrennt werden,
**dadurch gekennzeichnet, dass** vor dem Thermoformen einer Reihe von Behältern (2) in einem quer verlaufenden Band (21) des thermoplastischen Streifens (3), der in einem späteren Zyklus zum Thermoformen einer Reihe von Behältern (2) verwendet wird, für jeden der durch Thermoformen herzustellenden Behälter Vorabeinschnitte (23a bis 23d) ausgeführt werden, die durch Verbindungspunkte (24a bis 24d) voneinander getrennt sind und die fast den gesamten endgültigen Umfang (9) des Rands (6) des Behälters bilden, wobei die Verbindungspunkte (24a bis 24b) beim Abtrennen der Behälter in einem späteren Zyklus nach dem Verschließen der gefüllten Behälter durchtrennt werden.

2. Verfahren nach Anspruch 1,
**dadurch gekennzeichnet, dass** die Verbindungspunkte durch Anlegen beweglicher Stempel (51) an die Ränder (6) der Behälter (2) durchtrennt werden, wobei die Stempel insbesondere mit feststehenden Gegenwerkzeugen (53) zusammenwirken, die zwischen den Behältern einer Reihe angeordnet sind.

3. Verfahren nach einem der Ansprüche 1 oder 2,
**dadurch gekennzeichnet, dass** die Vorabeinschnitte (23a bis 23d) durch Schmelzen des Materials des thermoplastischen Streifens ausgeführt sind.

4. Verfahren nach einem der Ansprüche 1 bis 3,
**dadurch gekennzeichnet, dass** vor dem Thermoformen ein Restbereich (25) des thermoplastischen Streifens, der zwischen zwei aufeinanderfolgenden, quer verlaufenden Bändern liegt, gestreckt wird.

5. Verfahren nach einem der Ansprüche 1 bis 4,
**dadurch gekennzeichnet, dass** vor dem Verschließen der gefüllten Behälter eine Reihe von Deckeln (4) aus einem sich schrittweise vorwärtsbewegenden Deckelstreifen (5) ausgeschnitten wird.

6. Verfahren nach Anspruch 5,
**dadurch gekennzeichnet, dass** Deckel (4) mit einem Umfang ausgeschnitten werden, der wenigstens zum Teil dem endgültigen Umfang (9) der Ränder (6) der Behälter (2) angepasst ist.

7. Verfahren nach Anspruch 6,
**dadurch gekennzeichnet, dass** die Deckel (4) solchermaßen ausgeschnitten sind, dass sie jeweils eine Greiflasche (11) aufweisen, die jenseits eines diskontinuierlichen Einschnitts (23a, 23b) des zugehörigen gefüllten Behälters (2) nach außen angeordnet ist.

8. Verfahren nach einem der Ansprüche 5 bis 7,
**dadurch gekennzeichnet, dass** in einem Zyklus eine Reihe von Deckeln (4) ausgeschnitten wird, diese über eine Reihe gefüllter Behälter geführt werden, diese auf den Rändern der Behälter durch eine Punktverbindung fixiert werden und in einem späteren Zyklus auf den Rändern (6) der Behälter (2) versiegelt werden.

9. Verfahren nach einem der Ansprüche 5 bis 8,
**dadurch gekennzeichnet, dass** eine Reihe von Deckeln (4) aus einem Deckelstreifen (5) ausgeschnitten wird, dessen Breite geringer ist als die Breite des thermoplastischen Streifens (3).

10. Verfahren nach Anspruch 9,
**dadurch gekennzeichnet, dass** der Vorschubschritt des Deckelstreifens (5) kleiner ist als der Vorschubschritt des thermoplastischen Streifens (3).

11. Anlage zum Herstellen, Füllen und Verschließen von Behältern (2) mit Hinterschnitt, die Ränder (6) aufweisen, deren Durchmesser (D₂) kleiner sind als die Durchmesser (D₁) der Körper (8) der Behälter (2), mit Mitteln (13) zum schrittweisen Vorschieben eines Streifens (3) aus thermoplastischem Material und aufweisend von vorne nach hinten, in Vorschubrichtung des Streifens (3), eine Thermoformstation (15), die geeignet ist, in dem Streifen eine quer angeordnete Reihe von Behältern (2) durch Thermoformen auszuführen, eine Station (16) zum Befüllen einer Behälterreihe, eine Station (40) zum Verschließen einer Reihe gefüllter Behälter mit Deckeln (4), und eine Station (17) zum Abtrennen einer Reihe verschlossener Behälter (2) von dem thermoplastischen Streifen,
**dadurch gekennzeichnet, dass** sie vor der Thermoformstation (15) eine Vorabeinschnittstation (20) umfasst, die in einem quer verlaufenden Band (21) des thermoplastischen Streifens (3), der in einem späteren Zyklus zum Thermoformen einer Reihe von Behältern verwendet wird, für jeden der durch Thermoformen herzustellenden Behälter Vorabeinschnitte (23a bis 23d) auszuführen vermag, die durch Verbindungspunkte (24a bis 24d) voneinander getrennt sind und die fast den gesamten endgültigen Umfang (9) des Rands (6) eines entsprechenden Behälters bilden, und dass die Trennstation (17) Mittel zum Durchtrennen der Verbindungspunkte (24a bis 24d) in einem späteren Zyklus umfasst.

12. Anlage nach Anspruch 11,
**dadurch gekennzeichnet, dass** die Vorabeinschnittstation Heißschneidewerkzeuge umfasst.

13. Anlage nach einem der Ansprüche 11 oder 12,
**dadurch gekennzeichnet, dass** die Mittel zum Durchtrennen der Verbindungspunkte (24a bis 24d) einer Reihe gefüllter und verschlossener Behälter vertikal bewegliche Stempel (51) umfassen, die an den Rändern (6) der Behälter (2) anliegen und insbesondere mit feststehenden Gegenwerkzeugen (53) zusammenwirken, die zwischen den Behältern der Reihe angeordnet sind.

14. Anlage nach einem der Ansprüche 11 bis 13,
**dadurch gekennzeichnet, dass** sie ferner vor der Thermoformstation Mittel (26) zum Strecken eines zwischen zwei aufeinanderfolgenden, schmalen quer verlaufenden Bändern (21) liegenden Restbereichs (25) des thermoplastischen Streifens (3) umfasst.

15. Anlage nach Anspruch 14,
**dadurch gekennzeichnet, dass** die Streckmittel (26) vor der Vorabeinschnittstation (20) angeordnet sind.

16. Anlage nach einem der Ansprüche 11 bis 14,
**dadurch gekennzeichnet, dass** sie ferner Mittel (41) zum schrittweisen Vorschieben eines Deckelstreifens (5), Mittel (42) zum Ausschneiden einer Reihe von Deckeln, Mittel zu deren Heranführen über eine Reihe gefüllter Behälter, Mittel zu deren Fixieren auf den Rändern (6) der jeweiligen Behälter (2) in einem Zyklus und Mittel (43) zu deren Versiegeln auf den Rändern (6) in einem späteren Zyklus umfasst.
